# EUROPÄISCHE PATENTSCHRIFT

(11) **EP 1 660 766 B1**
(45) Veröffentlichungstag und Bekanntmachung des Hinweises auf die Patenterteilung: **16.07.2008**
(21) Anmeldenummer: 04787095.1
(22) Anmeldetag: 03.09.2004
(51) Int. Cl.: F02D 41/30, F02D 41/40, F02D 37/02

(54) **VERFAHREN ZUR STEUERUNG DES ÜBERGANGS EINES DIREKTEINSPRITZENDEN OTTOMOTORS**
METHOD FOR CONTROLLING THE TRANSITION OF A DIRECT-INJECTION SPARK-IGNITION ENGINE
PROCEDE POUR COMMANDER LE PASSAGE ENTRE DEUX MODES DE FONCTIONNEMENT D'UN MOTEUR A ETINCELLES ET A INJECTION DIRECTE

(30) Priorität: 05.09.2003 DE 10341070
(43) Veröffentlichungstag der Anmeldung: 31.05.2006
(73) Patentinhaber: Continental Automotive GmbH, 30165 Hannover (DE)
(72) Erfinder: WEISS, Frank, 93080 Pentling/Grasslfing (DE); ZHANG, Hong, 93105 Tegernheim (DE)
(86) Internationale Anmeldenummer: PCT/EP2004/052023
(87) Internationale Veröffentlichungsnummer: WO 2005/024213

(56) Entgegenhaltungen:
- EP-A- 0 889 218
- EP-A- 1 081 364
- WO-A-03/052253
- WO-A-20/04055351
- DE-A- 10 146 504
- DE-B- 10 334 401
- US-A- 5 168 851
- PATENT ABSTRACTS OF JAPAN Bd. 1997, Nr. 01, 31. Januar 1997 (1997-01-31) -& JP 08 240119 A (NISSAN MOTOR CO LTD), 17. September 1996 (1996-09-17)

## Beschreibung

Die Erfindung geht von einem Verfahren nach dem Anspruch 1 aus, mit dem der Übergang von einer ersten Betriebsart eines mit Kraftstoff-Direkteinspritzung betriebenen Ottomotors auf eine zweite Betriebsart steuerbar ist, wobei der Ventilhub umgeschaltet wird.

Es ist bereits bekannt, dass beim Umschalten zwischen zwei Betriebsarten in der Regel ein Drehmomentensprung auftritt, der je nach Betriebsart unzulässig groß sein kann. Die Ursache für diesen Drehmomentensprung wird darin gesehen, dass bei den verschiedenen Betriebsarten unterschiedlich hohe Luftmassen in den Zylindern des Ottomotors angesaugt werden, durch die entsprechend hohe Drehmomente generiert werden. Der Drehmomentensprung kann zu einer Laufunruhe des Ottomotors führen, die sich im Fahrbetrieb in unerwünschter Weise, zum Beispiel als Ruckeln bemerkbar macht.

Bei kleineren Luftmassensprüngen gelang es bisher, siehe z.B. US-A-5 168 851, diese durch Verstellung des Zündwinkels zu kompensieren. Dabei wurde der Zündwinkel so weit nach spät verstellt, dass noch eine sichere Verbrennung des Kraftstoff-Luftgemisches gewährleistet wird. Die späte Verbrennung des Kraftstoff-Luftgemisches bewirkt jedoch ein reduziertes Drehmoment. Bei einem großen Luftmassensprung konnte der Fall auftreten, dass die Zündwinkelverstellung allein nicht mehr zur Kompensation des Drehmomentensprungs ausreicht. Um zu vermeiden, dass es in diesem Fall zu dem unerwünschten Ruckeln des Fahrzeugs kommt, wurde in der Regel der Umschaltvorgang in die zweite Betriebsart unterbunden oder der Motor wurde so ausgelegt, dass kein hoher Luftmassensprung auftreten konnte. Dieses musste mit einem entsprechend höheren Kraftstoffverbrauch erkauft werden.

Der Erfindung liegt die Aufgabe zugrunde, ein Verfahren beziehungsweise eine Vorrichtung vorzuschlagen, mit der eine deutlich größere Reduzierung des Drehmomentensprungs erzielt werden kann. Diese Aufgabe wird mit den Merkmalen der nebengeordneten Ansprüche 1 und 9 gelöst.

Bei dem erfindungsgemäßen Verfahren zur Steuerung des Übergangs zwischen zwei Betriebsarten mit den kennzeichnenden Merkmalen des Anspruchs 1 ergibt sich der Vorteil, dass auch ein großer Drehmomentensprung noch erfolgreich reduziert werden kann, ohne die Verbrennung des Kraftstoff-Luftgemisches zu gefährden. Das wird durch eine Mehrfacheinspritzung erreicht, wobei wenigstens eine Teilmenge des einzuspritzenden Kraftstoffs während der Kompressionsphase in den oder die Zylinder des Ottomotors eingespritzt wird. Durch die Einspritzung während der Kompressionsphase ergeben sich drei wesentliche Effekte, die eine Reduzierung des Drehmoments unterstützen: Durch die geringere Innenkühlung im Zylinder verringert sich die angesaugte Luftmasse, weil ein Teil der eingespritzten Kraftstoffmenge zu dem Zeitpunkt eingespritzt wird, wenn die Ventile des Zylinders bereits geschlossen ist (Kompressionsphase). Des weiteren ist vorteilhaft, dass sich der Wirkungsgrad der Verbrennung verschlechtert, da bei der späten Einspritzung der eingespritzte Kraftstoff weniger stark verwirbelt wird. Schließlich hat sich durch Messungen in vorteilhafter Weise auch gezeigt, dass sich die Laufruhe des Ottomotors nicht ändert, wenn bei Einspritzung in der Kompressionsphase der Zündwinkel noch weiter in Richtung spät verstellt wird. Durch die Verstellung des Zündwinkels auf spät kann eine weitere Reduzierung des Drehmomentes erreicht werden. Als besonders vorteilhaft wird angesehen, dass durch die Erfin-dung eine deutlich größere Reduzierung des Drehmomentensprungs erreicht werden, ohne die Laufruhe des Ottomotors zu beeinträchtigen.

Durch die in den abhängigen Ansprüchen aufgeführten Maßnahmen sind vorteilhafte Weiterbildungen und Verbesserungen des in den nebengeordneten Ansprüche 1 und 9 angegebenen Verfahrens beziehungsweise der Vorrichtung gegeben. Als besonders vorteilhaft wird eine Lösung angesehen, während der Umschaltphase die einzuspritzende Kraftstoffmenge vollständig in der Kompressionsphase einzuspritzen. Dadurch liefert der Kraftstoff keinen Beitrag zur Kühlung der im Zylinder befindlichen Luftmasse, so dass während der Umschaltphase die Luftmasse relativ klein ist und daher ein relativ kleines Drehmoment erzeugt wird.

Während der Kompressionsphase sind die Ventile des Zylinders geschlossen, so dass der im Zylinder eingespritzte Kraftstoff nicht so stark verwirbelt werden kann, als wenn das Einspritzventil geöffnet wäre. Zur weiteren Reduktion des Drehmomentes ist es daher in vielen Fällen ausreichend, nur eine Teilmenge des Kraftstoffs einzuspritzen.

Eine weitere Reduktion des Drehmomentes wird erreicht, wenn während der Umschaltphase der Zündwinkel kontinuierlich auf spät verstellt wird. Denn je später das Kraftstoff-Luftgemisch gezündet wird, um so geringer wird das entstehende Drehmoment.

Eine günstige Lösung wird auch darin gesehen, dass nach der Umschaltung der normale Betrieb der Standardeinspritzung für die jeweilige Betriebsart wieder aufgenommen wird, sobald der Drehmomentenausgleich abgeschlossen ist. Wurde beispielsweise auf den Betrieb mit kleinem Ventilhub umgeschaltet, dann kann nun die Steuerung der Luftmasse, der Kraftstoffmenge und des Zündwinkels auf die für diese Betriebsart spezifischen Werte eingestellt werden. Es ergibt sich kein negativer Einfluss auf die Laufruhe des Ottomotors, so dass dieser Umschaltvorgang auch von den Insassen des Fahrzeugs nicht wahrgenommen werden kann.

Eine bevorzugte günstige Anwendung ergibt sich, wenn bei einer diskreten Umschaltung des Ventilhubs die Ventilhubdifferenz vergrößert werden kann. Der unterschiedliche Ventilhub bewirkt einen unterschiedlich hohen Füllgrad der Zylinder und somit auch entsprechend unterschiedlich hohe Drehmomente. Da ein hoher Füllgrad zwangsläufig auch mit einem erhöhten Kraftstoffverbrauch verbunden ist, kann insbesondere im Teillastbereich, wenn nicht die maximale Leistung des Motors benötigt wird, auf einen niedrigen Ventilhub mit entsprechend geringerem Kraftstoffverbrauch umgeschaltet werden.

Es ist vorgesehen, für die Umschaltung auf den Betrieb mit dem kleinen Ventilhub zunächst die Drosselklappe zu öffnen, den Zündwinkel auf einen zulässigen minimalen Wert zurückzunehmen und die Mehrfacheinspritzung in der Kompressionsphase zu aktivieren. Dadurch lässt sich am Sichersten ein Drehmomentensprung kompensieren.

War die Umschaltung erfolgreich, dann kann die Einspritzung auf Standardwerte umgestellt werden.

Bei der Vorrichtung zur Steuerung des Übergangs zwischen zwei Betriebsarten wird als besonders günstig angesehen, dass für die Steuerung der Umschaltung ein Programm verwendet wird, das mit Hilfe eines Algorithmus wenigstens eine Stelleinrichtung des Ottomotors in der Weise steuerbar ist, dass die Kraftstoff-Einspritzung in der Kompressionsphase erfolgt. Insbesondere können mit dem Programm Stelleinrichtungen für die Drosselklappe, die Zündwinkelverstellung und/oder die Kraftstoffeinspritzung gesteuert werden.

Ein Ausführungsbeispiel der Erfindung ist in der Zeichnung dargestellt und wird in der nachfolgenden Beschreibung näher erläutert.
- Figur 1: zeigt ein Ausführungsbeispiel der Erfindung mit einem Diagramm, bei dem vom Betrieb mit großem Ventilhub auf einen Betrieb mit kleinem Ventilhub umgeschaltet wird.
- Figur 2: zeigt ein zweites Diagramm der Erfindung, bei dem von einem Betrieb mit kleinem Ventilhub auf einen Betrieb mit großem Ventilhub umgeschaltet wird,
- Figur 3: zeigt in schematischer Darstellung ein Blockschaltbild und
- Figur 4: zeigt ein Flussdiagramm für die Steuerung der Betriebsarten.

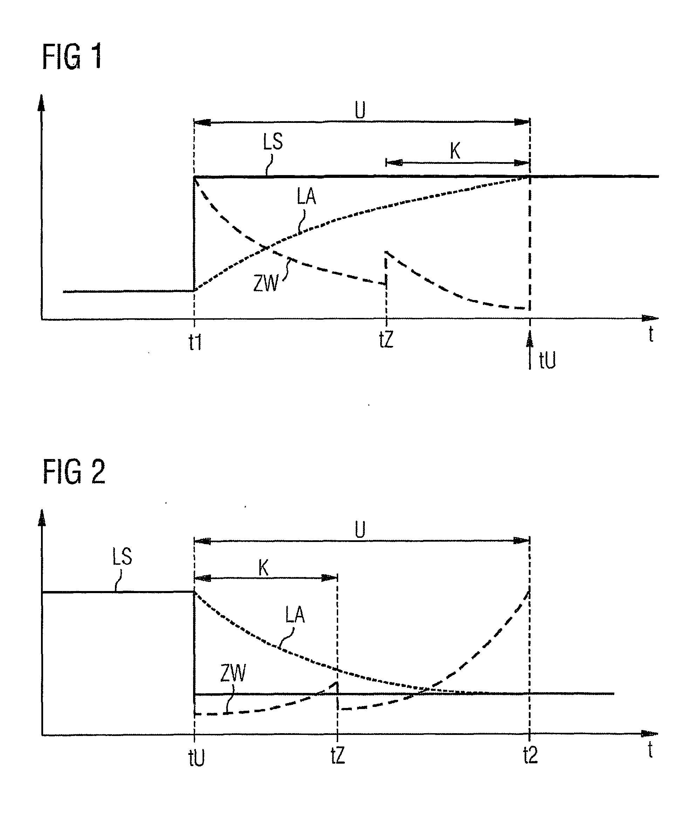

Bei dem erfindungsgemäßen Ausführungsbeispiel gemäß Figur 1 wird an Hand eines Diagramms die Funktionsweise für die Umschaltung zwischen zwei Betriebsarten näher erläutert. Beispielhaft wird angenommen, bei einem mit Kraftstoff-Direkteinspritzung betriebenen Ottomotor soll von einem Betrieb mit einem großen Ventilhub auf einen Betrieb mit einem kleinem Ventilhub für die Ein- und/oder Auslassventile umgeschaltet werden. Durch diese Umschaltung ist zwar das erzeugte Drehmoment kleiner, andererseits ist diese Betriebsart Kraftstoff sparender, so dass bei bestimmten Betriebsbedingungen, wenn beispielsweise bei Teillast dem Motor kein maximales Drehmoment abverlangt werden muss, ein kraftstoffsparender Betrieb mit kleinem Ventilhub vorteilhaft erscheint. Durch die Umschaltung in den Betrieb mit dem kleinem Ventilhub kann nicht mehr so viel Luft in die Zylinder des Ottomotors einströmen, wie zuvor bei dem Betrieb mit großem Ventilhub, so dass dadurch das Drehmoment reduziert wird. Für die Umschaltung des Ventilhubs sind verschiedene Verfahren bekannt, so dass diese Verfahren nicht näher erläutert werden müssen. Beispielsweise kann die Umschaltung mechanisch durch axiales Verschieben der Nockenwellen erfolgen. Die Nockenwellen sind in diesem Fall mit unterschiedlich hohen Nocken ausgebildet, durch die die Ventilstößel betätigt werden. Alternativ können die Tassen der Stößel hydraulisch angehoben werden und somit den Ventilhub beeinflussen.

Die Umschaltung erfolgt automatisch und soll für den Fahrer oder die Fahrzeuginsassen nicht spürbar sein, um den Fahrkomfort nicht zu beeinträchtigen. Wird jedoch zu einem späteren Zeitpunkt das volle Drehmoment des Motors benötigt, dann wird wieder automatisch in den Betrieb mit großem Ventilhub zurückgeschaltet.

In dem Diagramm von Figur 1 ist auf der x-Achse eine Zeit t aufgetragen. Auf der Y-Achse sind die jeweiligen Amplituden der drei unterschiedlichen Kurven eingetragen. Die durchgezogene Kurve soll einen vorgegebenen Luftmassensollwert LS repräsentieren, der für die beiden Betriebsarten großer Ventilhub beziehungsweise kleiner Ventilhub erforderlich ist. Dieser Luftmassensollwert LS kann mit der Drosselklappe des Ottomotors eingestellt werden. Die gepunktete Kurve LA gibt den aktuellen Wert für Luftmasse wieder, die sich entsprechend den Voreinstellungen in dem entsprechenden Zylinder des Ottomotors einstellt. Die gestrichelt dargestellte Kurve entspricht dem Zündwinkel ZW, der von einer entsprechenden Steuereinrichtung vorgegeben wird.

Im linken Teil des Diagramms von Figur 1 befindet sich der Motor noch im Betrieb mit großem Ventilhub. Die Drosselklappe ist relativ weit geschlossen, der Luftmassensollwert LS befindet sich daher auf einem unteren Niveau (linkes unteres Segment der Kurve LS). Ab dem senkrechten Anstieg von Kurve LS beginnt zum Zeitpunkt t1 die Umschaltphase zum kleinen Ventilhub, der im rechten Teil des Diagramms abgeschlossen ist. Zum Umschalten in den kleinen Ventilhub muss zunächst der Luftmassensollwert LS angehoben werden (senkrechter Anstieg der Kurve LS), um das Drehmoment beim Umschalten konstant halten zu können. Dazu wird zum Zeitpunkt t1 die Drosselklappe geöffnet, so dass die aktuelle Luftmasse in dem Zylinder des Motors entsprechend der Kurve LA ansteigt. Erreicht die Kurve LA den Luftmassensollwert LS, dann kann in den Betrieb mit kleinem Ventilhub umgeschaltet werden. Dieser späteste Umschaltzeitpunkt ist als tU gekennzeichnet.

Mit dem Umschalten der Drosselklappe wird vorzugsweise gleichzeitig entsprechend der Kurve ZW der Zündwinkel von früh auf spät zu einem minimalen Wert zurückgenommen, der zum Zeitpunkt tZ erreicht wird. Das im Zylinder befindliche Kraftstoff-Luftgemisch ist bei diesem Zündwinkel ZW noch brennbar.

Erfindungsgemäß ist vorgesehen, eine Mehrfacheinspritzung durchzuführen. Zum Zeitpunkt tZ wird bei dem minimalen Zündwinkel die Mehrfacheinspritzung gestartet. Dadurch verschlechtert sich die Ansaugung der Luftzufuhr, was zu einer Erhöhung des Zündwinkels (in Richtung früh) führt. Anschließend kann der Zündwinkel bis zu einem für die Mehrfacheinspritzung noch niedrigeren Wert in Richtung spät zurückgenommen werden, so dass die Kurve ZW wieder abfällt. Spätestens bei dem minimalen Zündwinkel zum Zeitpunkt tU muss tatsächlich in den Betrieb mit kleinem Ventilhub umgeschaltet werden. Nach der Umschaltung in den Betrieb mit kleinem Ventilhub ist die Luftmasse in den Zylindern groß genug, um keinen Drehmomentensprung auszulösen. Für diese Betriebsart gelten nun die Standardwerte für die Zündung, Luftmasse und Einspritzung.

Die Mehrfacheinspritzung wird vorzugsweise in der Kompressionsphase K durchgeführt, wenn die Einlass- und Auslassventile des Zylinders geschlossen sind. Die Einspritzung in der Kompressionsphase K verläuft zwischen den beiden Zeitmarken tZ und tU. Die gesamte Umschaltphase U zwischen den beiden Zeitpunkten t1 und tU ist durch den Pfeil U gekennzeichnet.

Es ist vorgesehen, in der Kompressionsphase, wenn die Ventile geschlossen sind, die einzuspritzende Kraftstoffmenge als Teilmenge zu dosieren. Alternativ kann auch die gesamte Kraftstoffmenge in der Kompressionsphase eingespritzt werden.

Das Diagramm der Figur 2 zeigt den Fall, wenn vom Betrieb mit kleinem Ventilhub in den Betrieb mit großem Ventilhub umgeschaltet wird. Die Umschaltung verläuft in umgekehrter Weise, wie sie zuvor zu Figur 1 erläutert wurde. Im linken Teil von Figur 2 befindet sich der Motor in der Betriebsart kleiner Ventilhub, d.h. die Drosselklappe ist relativ weit geöffnet, so dass die Kurve LS für den Luftmassensollwert eine große Amplitude aufweist. Die Zündung ist auf früh geschaltet. Zum Zeitpunkt tU findet die Umschaltung des Ventilhubs statt und es wird zunächst die Einspritzung in der Weise geändert, dass wenigstens ein Teil der einzuspritzenden Kraftstoffmenge in der Kompressionsphase K abgesetzt wird. Gleichzeitig wird begonnen, die Drosselklappe zu schließen, d.h. es wird ein kleinerer Luftmassensollwert entsprechend der Kurve LS vorgegeben. Der aktuelle Luftmassenwert (Kurve LA) passt sich über die Zeit t dem vorgegebenen geringeren Luftmassensollwert LS an. Entsprechend der Kurve ZW wird der Zündwinkel zum Zeitpunkt tU auf Grund der Ventilhubumschaltung in Richtung spät verstellt. Anschließend wird er Zündwinkel entsprechend der sinkenden Luftmasse wieder auf früh gestellt. Dabei kann zum Zeitpunkt tZ der Zündwinkel wieder zurückgenommen werden, um ihn bei der Standardeinspritzung wieder anzuheben. Zum Zeitpunkt t2 ist der Zündwinkel auf seinem Basiswert und die Umschaltung ist damit beendet. Der Pfeil K zeigt die Kompressionsphase an. Die weitere Steuerung von Einspritzung, Luftmasse und Zündwinkel erfolgt nach der Umschaltung wieder mit dem entsprechenden Standardprogramm.

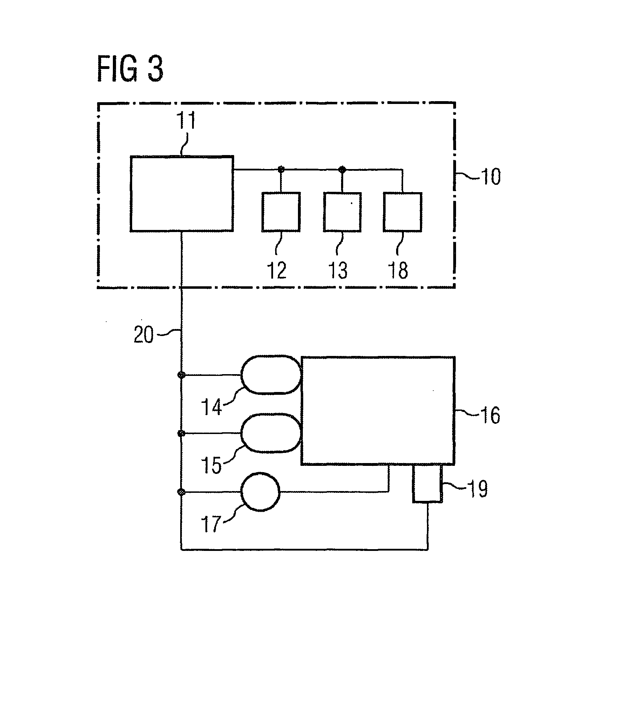

Figur 3 zeigt in schematischer Darstellung eine Vorrichtung (Steuervorrichtung) 10 zur Steuerung der Übergangs zwischen zwei Betriebsarten zwischen dem Betrieb mit einem großem Ventilhub und dem Betrieb mit einem kleinem Ventilhub. Die Vorrichtung 10 ist vorzugsweise als Teil eines Motorsteuersystems ausgebildet, das mit Hilfe eines Softwareprogramms (Programm mit Programmspeicher 12) die Motorfunktionen beim Übergang zwischen den beiden Betriebsarten steuert. Dieses Programm wird jedes Mal bei einer Umschaltung in die andere Betriebsart abgearbeitet. Des weiteren weist die Vorrichtung 10 einen Speicher 13 auf, in dem ein Algorithmus für die Umschaltung der beiden Betriebsarten sowie weitere Daten wie vorgegebene Betriebseinstellungen, Grenzwerte usw. vorzugsweise in tabellarischer Form gespeichert sind. Die Vorrichtung 10 ist vorzugsweise über ein Bussystem 20 mit einem Stellglied für die Drosselklappe 14 des Ottomotors 16 verbunden. Des weiteren ist an das Bussystem 20 eine Vorrichtung zur Drehwinkelerfassung 15 angeschlossen. Somit kann mit Hilfe des Stellgliedes 14 die Frischluftmenge (Frischluftmasse) für die einzelnen Zylinder des Ottomotors 16 und mit der Vorrichtung für die Drehwinkelerfassung 15 der Zündwinkel gesteuert werden. Des weiteren ist ein Drehzahlsensor 17 vorgesehen, der an eine Einheit 18 der Vorrichtung 10 Signale liefert, aus denen die aktuelle Motordrehzahl berechnet wird. Aus den erfassten Daten kann zum Beispiel mit Hilfe eines Drehmomentenmodells für jeden Betriebszustand das entsprechende Drehmoment des Ottomotors 16 ermittelt werden. Daraus ergibt sich dann ein Steuersignal für eine Stellvorrichtung 19, mit der die Hubumschaltung der Ventile steuerbar ist.

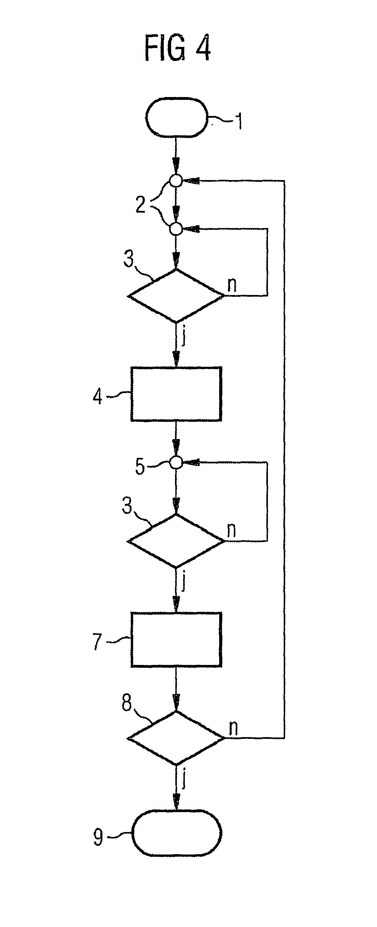

Figur 4 zeigt ein Flussdiagramm, wie die Umschaltphase der beiden Betriebsarten mit Hilfe des Softwareprogramms, das in dem Programmspeicher 12 der Steuervorrichtung 10 installiert ist, ablaufen kann. Das Programm zeigt beispielhaft die Umschaltung von dem Betrieb mit einem großen Ventilhub auf den Betrieb mit einem kleinen Ventilhub, wie er zuvor zu Figur 1 erläutert wurde. Die Rückschaltung oder eine Umschaltung zwischen zwei anderen Betriebsarten erfolgt in analoger Weise.

Gemäß Figur 4 startet das Programm in Position 1 die Betriebsartenumschaltung, nachdem die Vorrichtung 11 ein Signal zum Einleiten der Umschaltphase ermittelt oder erhalten hat. Daraufhin wird zunächst die Drosselklappe geöffnet und der Zündwinkel iterativ zurückgenommen und in Position 3 wird geprüft, ob der aktuelle Zündwinkel einen vorgegebenen minimalen ersten Grenzwert unterschreitet. Ist das nicht der Fall (bei n), dann springt das Programm auf Position 2 zurück und der Zündwinkel wird weiter zurückgenommen.

Ist bei j schließlich der aktuelle Zündwinkel kleiner als der vorgegebene erste Grenzwert, dann wird in Position 4 die Umschaltung der Kraftstofffeinspritzung in der Kompressionsphase des Ottomotors 16 eingeleitet. Die Einspritzung wird als Mehrfacheinspritzung ausgeführt Entscheidend ist jedoch, dass durch die Einspritzung während der Kompressionsphase des Ottomotors das erzeugte Drehmoment weiter abfällt, als wenn nur der Zündwinkel verstellt worden wäre. Dadurch kann eine Anpassung der Drehmomente vor und nach der Umschaltung leichter durchgeführt werden und somit ein Drehmomentensprung mit einer höheren Zuverlässigkeit vermieden werden.

In Position 6 wird abgefragt, ob die Einstellung es Drehmomentes ausreicht, um mit der Standardeinspritzung fortzufahren. Ist das nicht der Fall, dann springt bei n das Programm auf Position 5 zurück. Die Zündung wird weiter zurückgenommen und in Position 6 wird wieder geprüft, ob jetzt mit der Standardeinspritzung fortgefahren werden kann.

Ist das der Fall (bei j), dann wird in Position 7 auf die Standardeinspritzung umgeschaltet, die für die aktuelle Betriebsart vorgesehen ist.

In Position 8 wird geprüft, ob die Betriebsumschaltung erfolgreich abgeschlossen wurde. Ist das nicht der Fall (bei n), dann springt das Programm zum Programmstart auf Position 2 zurück und das Programm startet erneut, wie oben beschrieben wurde.

Bei positivem Abschluss der Betriebsartenumschaltung (bei j) endet das Programm in Position 9.

## Patentansprüche

1. Verfahren zur Steuerung des Übergangs von einer ersten Betriebsart eines direkt einspritzenden Ottomotors (46) auf eine zweite Betriebsart, wobei ein Ventilhub umgeschaltet wird, wobei vor und nach der Umschaltung das Drehmoment ermittelt wird und ein unzulässiger Drehmomentensprung teilweise durch eine Zündwinkelverstellung kompensiert wird, wobei zur Umschaltung in den kleinen Ventilhub zunächst die Drosselklappe geöffnet wird, bevor zum kleinen Ventilhub umgeschaltet wird, und wobei der Zündwinkel auf einen zulässigen minimalen Wert zurückgenommen wird, **dadurch gekennzeichnet, dass** zur weiteren Kompensation des unzulässigen Drehmomentensprungs eine Mehrfacheinspritzung von Kraftstoff erfolgt, wobei wenigstens eine Teilmenge des einzuspritzenden Kraftstoffs während der Kompressionsphase eingespritzt wird.

2. Verfahren nach Anspruch 1, **dadurch gekennzeichnet, dass** während der Umschaltphase die einzuspritzende Kraftstoffmenge vollständig in der Kompressionsphase eingespritzt wird.

3. Verfahren nach einem der vorhergehenden Ansprüche, **dadurch gekennzeichnet, dass** die Teilmenge des einzuspritzenden Kraftstoffs in der Phase abgesetzt wird, wenn wenigstens ein Einlassventil geschlossen ist.

4. Verfahren nach einem der vorhergehenden Ansprüche, **dadurch gekennzeichnet, dass** der Zündwinkel kontinuierlich auf spät verstellt wird.

5. Verfahren nach einem der vorhergehenden Ansprüche, **dadurch gekennzeichnet, dass** nach der Umschaltung eine Rückschaltung in den normalen Betrieb erfolgt, wenn der Drehmomentenausgleich erfolgreich abgeschlossen wurde.

6. Verfahren nach einem der vorhergehenden Ansprüche, **dadurch gekennzeichnet, dass** bei einer diskreten Ventilhubumschaltung ein vergrößerter Ventilhub vorgebbar ist.

7. Verfahren nach einem der vorhergehenden Ansprüche, **dadurch gekennzeichnet, dass** nach der Umschaltung in den Betrieb mit kleinem Ventilhub oder großem Ventilhub auf die entsprechende Standardeinspritzung umgestellt wird.

## Claims

1. Method for controlling the transition from a first mode of operation of a direct fuel injection spark ignition engine (46) to a second mode of operation, wherein a valve lift switchover is performed, wherein the torque is determined before and after the switchover and any impermissible step-change in the torque is partially compensated by an adjustment of the ignition angle, wherein for the purpose of switching over to the small valve lift the throttle valve is first opened before a switchover to the small valve lift is initiated, and wherein the ignition angle is retarded back to a permissible minimum value, **characterised in that** for the purpose of further compensating for the impermissible step-change in torque a split injection of fuel is effected, with at least a portion of the fuel load to be injected being injected during the compression phase.

2. Method according to claim 1, **characterised in that** during the switchover phase the fuel load to be injected is injected entirely within the compression phase.

3. Method according to one of the preceding claims, **characterised in that** the portion of the fuel load which is to be injected is fed in during the phase when at least one inlet valve is closed.

4. Method according to one of the preceding claims, **characterised in that** the ignition angle is continuously retarded.

5. Method according to one of the preceding claims, **characterised in that** after the switchover there is a return to normal operation if the torque smoothing has been successfully completed.

6. Method according to one of the preceding claims, **characterised in that** a larger valve lift can be specified in the case of a discrete valve lift switchover.

7. Method according to one of the preceding claims, **characterised in that** after the switchover to operation with a small valve lift or a large valve lift the settings for the corresponding standard injection are then applied.

## Revendications

1. Procédé pour la commande de la commutation d'un premier mode de fonctionnement d'un moteur à essence à injection directe (46) à un deuxième mode de fonctionnement, dans laquelle une levée des soupapes est commutée, dans lequel avant et après la commutation, le couple est déterminé et un saut de couple inacceptable est partiellement compensé par une modification du calage de l'allumage, auquel cas, pour la commutation sur la petite levée des soupapes, le volet d'étranglement est tout d'abord ouvert avant que se produise la commutation sur la petite levée des soupapes, et dans lequel l'angle d'allumage est ramené à une valeur minimale admissible, **caractérisé en ce que**, pour assurer une compensation complémentaire du saut de couple inacceptable, il se produit une injection multiple de carburant, dans laquelle au moins une quantité partielle du carburant à injecter est injectée pendant le temps de compression.

2. Procédé selon la revendication 1, **caractérisé en ce que**, pendant la phase de commutation, la quantité de carburant à injecter est entièrement injectée dans temps de compression.

3. Procédé selon une des revendications précédentes, **caractérisé en ce que** la quantité partielle du carburant à injecter est injectée dans le temps dans lequel au moins une soupape d'admission est fermée.

4. Procédé selon une des revendications précédentes, **caractérisé en ce que** l'angle d'allumage est continuellement décalé sur l'allumage tardif.

5. Procédé selon une des revendications précédentes, **caractérisé en ce qu'**après la commutation, il se produit un retour au fonctionnement normal lorsque la compensation du couple a été achevée avec succès.

6. Procédé selon une des revendications précédentes, **caractérisé en ce que**, dans le cas d'une commutation discrète de la levée des soupapes, une levée des soupapes agrandie peut être prédéterminée.

7. Procédé selon une des revendications précédentes, **caractérisé en ce que**, après la commutation sur le fonctionnement à petite levée des soupapes ou à grande levée des soupapes, il se produit une commutation sur l'injection standard appropriée.
